# EUROPEAN PATENT APPLICATION

(11) **EP 4 439 494 A1**
(43) Date of publication of application: **02.10.2024**
(21) Application number: 22896898.8
(22) Date of filing: 28.11.2022
(51) Int. Cl.: G06V 30/413, G06V 30/414, G06V 30/416, G06V 30/10, G06V 10/82, G06N 3/0464

(54) **METHOD FOR EXTRACTING AND STRUCTURING INFORMATION**

(30) Priority: 26.11.2021 BR 102021023977
(71) Applicant: Petroleo Brasileiro S.A. - PETROBRAS, 20031912 Rio de Janeiro (BR); Faculdades Católicas, 22451-900 Rio de Janeiro - RJ (BR)
(72) Inventor: CORDEIRO, Fabio Correa, 21941-915 Rio de Janeiro (BR); GOMES, Diogo da Silva Magalhães, 21941-915 Rio de Janeiro (BR); ROMEU, Régis Kruel, 21941-915 Rio de Janeiro (BR); ALEXANDRE, Antonio Marcelo Azevedo, 21941-915 Rio de Janeiro (BR); BATISTA, Vitor Alcantara, 20271-900 Rio de Janeiro (BR); RODRIGUES, Max de Castro, 21941-915 Rio de Janeiro (BR); MENDOZA, Leonardo Alfredo Forero, 22451-900 Rio de Janeiro (BR); ROSERO, Jose Eduardo Ruiz, 22451-900 Rio de Janeiro (BR); DA ROCHA, Renato Sayão Crystallino, 22451-900 Rio de Janeiro (BR); PACHECO, Marco Aurélio Cavalcanti, 22451-900 Rio de Janeiro (BR); VILLALLOBOS, Cristian Enrique Munoz, 22451-900 Rio de Janeiro (BR)
(74) Representative: Clarke, Modet y Cía., S.L.
(86) International application number: PCT/BR2022/050465
(87) International publication number: WO 2023/092211

(57) **Abstract**

The invention proposes a method that receives an unstructured document at the input, extracts its information, reorganizes and makes this information available in files that can be consumed by other systems. The method for extracting and structuring information comprises a (1) document page separator model, (2) block detection and segmentation model, (3) table extractor, (4) image extractor, (5) image classification model, (6) text extractor, (7) computer vision model for improving the image quality of the texts, (8) optical character recognition model, (09) model for spelling correction, (10) models for semantic enrichment of the text, (11) output file organizer and (12) metadata aggregator for information enrichment. There is also part of the invention a synthetic document generator that serves to create a training base made up of millions of synthetic documents, which emulate real documents commonly used by the O&G industry in different layout variations. These synthetic documents are used to train and update the artificial intelligence models used in the main process of extracting information. Accordingly, it comprises the following steps: (1) generation of synthetic documents, in different layout configurations; (2) training/tuning of computer vision and classification models; (3) quality control of the models under synthetic and real sets; (4) assessment of extraction results in the O&G domain; (5) identification of new formats or alterations to existing formats; (6) adjustment of parameters and configuration of new synthetic formats.

## Description

### FIELD OF THE UTILITY MODEL

### Field of the Invention

The present invention is related to the field of information retrieval in documents of interest to the oil and gas (O&G) industry. Information from technical documents is extracted with the invention, then this information can be enriched with metadata of interest in the domain, indexed and searched by search engines.

### Description of the State of the Art

Information extraction and structuring is an automatic task, performed by a computer, and consists of several subprocesses. Depending on the application, different challenges arise for this type of task. For example, it may be necessary to extract information from a page correctly without confusing texts, images and tables; or even, structure images or tables and relate them to their descriptive captions. There are different approaches to obtain an optimized and viable result within certain computational resource constraints. Additionally, to maximize the quality of the processed information, it is crucial to consider the semantic particularities inherent to the specific domain of oil and gas (O&G), including its specialized vocabulary and technical expressions, in addition to the main formats and visual layout of the types of documents commonly adopted by this industry.

Current approaches extract only one type of information at a time from documents - text or image. Furthermore, it is common for the texts inside images and tables to be mixed with the content of the paragraphs. Therefore, it is desirable to make use of multimodal methods that consider different text modalities, combining textual and image information to provide a better quality of the extracted information.

The search systems currently used by companies in the oil and gas (O&G) sector only retrieve documents in which the information is natively available in text format, that is, whose content is possible to be accessed by simple algorithms for reading texts. It is very common to have old documents that were digitized using obsolete technology and that contain many images, diagrams and tables. If we consider the internal informational content of the documents, they are practically not recoverable by existing search systems.

Artificial intelligence techniques have been applied in industry to solve the challenges posed by extracting information from technical documents. However, most of these techniques require the existence of data sets annotated by experts in the domain, in order to enable model training using these algorithms. However, the scarce availability of annotated data for the oil and gas (O&G) domain and the high costs for annotation by experts are an important restriction for the implementation of the information extraction systems.

US20200167558A1 discloses a system and method for using one or more computing devices to categorize text regions of an electronic document into types of document objects based on a combination of semantic information and appearance information of the electronic document.

Document US20210158093A1 discloses a system that creates computer-generated synthetic documents with precisely tagged page elements. The synthetic document generation system determines layout parameters for a plurality of image layouts.

Documents US20200167558A1 and US20210158093A1 do not have the ability to extract multiple modalities of information, such as text, images and tables, from unstructured documents, in addition to not addressing to the semantic particularities inherent to the oil and gas (O&G) domain.

Document US2019080164A1 discloses machine learning models that can be applied to process and instrumentation diagrams to extract graphical components, such as symbols and process loops representing the transport of chemical components or physical components, or control processes, in order to overcome the shortcomings of existing OCR-based and manual categorization solutions. Despite the potential for application in process diagrams in the oil and gas (O&G) domain, its application is restricted to documents containing this type of diagram.

Document CN110334346B discloses a method and device for extracting information from a PDF file, based on marking positions of images and texts. The objective of the process is to structure textual information into key and value collections, organized hierarchically based on the document layouts. In this case, the method for extracting text regions uses an abstraction of line segments, based on the extraction of character coordinates, data that is immediately available from the internal structure of PDF files, and, therefore, cannot be applied to documents that require OCR. It therefore departs from the more general method based on computer vision using neural networks that is used in this invention.

Document CN111259830A discloses a method for obtaining training data from PDF documents after manual tagging, using this data to train a convolutional neural network, and using the corresponding model of this trained network to extract information from PDF documents in the field of international agricultural trade. In this case, it includes a method for obtaining training data from real PDF documents and subsequent training of the convolutional neural network for classifying content fragments from PDF files. However, it differs fundamentally from this invention in the way of obtaining training data, which in the case of this invention are synthetic documents, which means a much greater potential for using training examples for the neural network, and, therefore, greater accuracy predicted for the object detection model.

Document CN113343658A discloses a method, device and calculation way for extracting information from PDF file tables. The information in a PDF file is mainly divided into paragraphs of text, tables, and images. Extracting images is relatively simple, while extracting paragraphs and text tables is more complicated, especially extracting complex nested tables. Aiming at the complete extraction of the wireframe table in the PDF file, it is currently normally carried out from bottom-up. The method works by extracting the simplest possible form of a table, and proceeds recursively through the table, finding the nested tables, until extracting the complete table. The document alleges that the method has "advantages of being simple to implement, having high extraction efficiency, high speed and the ability to retain the internal logical relations of complex tables." It is only specialized in extracting information from tables in PDF files, and is therefore not applicable to extracting images and captions.

Given the limitations present in the state of the art mentioned above, there is a need to develop a method capable of reading documents that are not in an editable format, that is, that have been digitized and their content is not accessible by simple algorithms. The above-mentioned state of the art does not have the unique features that will be presented in detail below.

### Objective of the Invention

The invention aims at automatically extracting textual data, images and tables from digitized documents in different formats. The method uses artificial intelligence computational models developed specifically to meet the particularities of the specialized domain of the oil and gas (O&G) industry. The invention was designed to support execution in a supercomputing environment, offering support for high processing parallelism, in order to allow efficient extraction of a large number of unstructured documents.

### Brief Description of the Invention

The invention proposes a method that receives a set of unstructured documents at the input, extracts and structures their information, reorganizes and makes this information available in files so that they can be consumed by other systems.

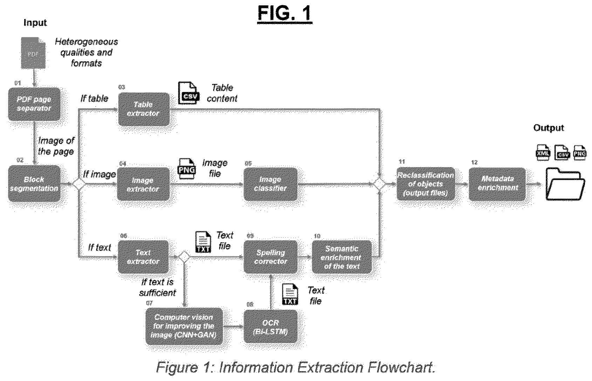

The method for extracting and structuring information, as illustrated in the diagram in Figure 1, comprises: (1) PDF page separator, (2) block detection and segmentation model, (3) table extractor, (4) image extractor, (5) image classification model, (6) text extractor, (7) computer vision model for improving the image quality of the texts, (8) optical character recognition model, (9) model for spelling correction, (10) models for semantic enrichment of the text, (11) output file organizer, (12) metadata aggregator for information enrichment.

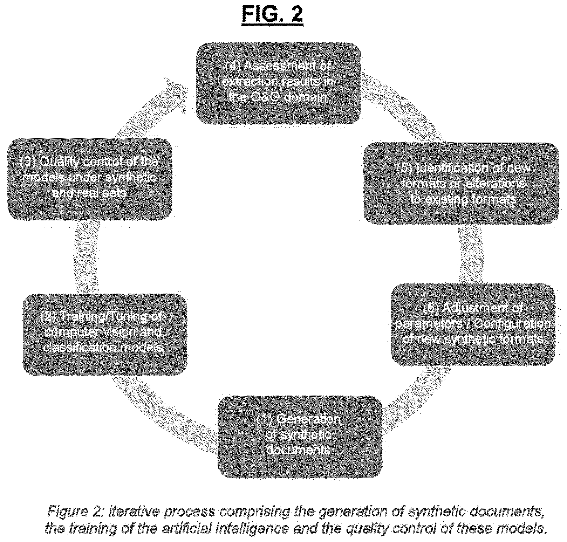

In addition to the main extraction process described above, the invention proposes a complementary process for generating synthetic documents that emulate real documents, used to train and update the artificial intelligence models used in the main process of extracting information. The method for generating synthetic documents and training artificial intelligence models, as illustrated in the diagram in Figure 2, comprises: (1) Generation of synthetic documents, (2) Training/Tuning of computer vision and classification models, (3) Quality control of the models under synthetic and real sets, (4) Assessment of extraction results in the oil and gas (O&G) domain, (5) Identification of new formats or alterations to existing formats, (6) Adjustment of parameters / Configuration of new synthetic formats.

### Brief Description of the Drawings

The present invention will be described in more detail below, with reference to the attached figures that, in a schematic way and not limiting the inventive scope, represent examples of its embodiment. In the drawings, there can be seen that:
- Figure 1 illustrates a flowchart of the method for extracting and structuring information.
- Figure 2 represents a diagram that describes the iterative process that comprises the generation of synthetic documents, the training of models based on these generated documents and the quality control of the model, until the point at which the model is able to be used in extraction of documents in the oil and gas (O&G) domain, with acceptable performance.

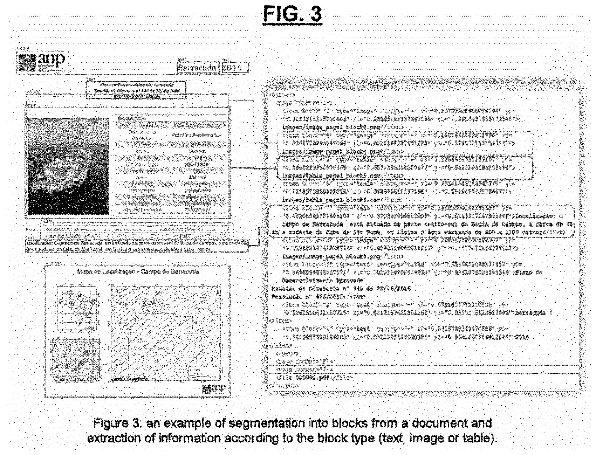

- Figure 3 presents an example of segmentation into blocks from a document, the classification of blocks according to the type of content, and the processing to extract information according to the respective classification of each block (text, image or table).
- Figure 4 represents the anomalies commonly found in text images.
- Figure 5 presents an approach to improve the performance of OCR algorithms.

### Detailed Description of the Invention

There follows below a detailed description of a preferred embodiment of the present invention, which is exemplary and in no way limiting. Nevertheless, it will be clear to a technician skilled on the subject, from reading this description, possible additional embodiments of the present invention further comprised by the essential and optional features below.

Using the invention, it was possible to separate texts, tables and images from documents, making it possible to store and structure these artifacts in a machine-intelligible format. With information artifacts persisted, accessible and machine-readable, it is possible to index and subsequently retrieve these documents through search engines. The invention paves the way for documents that were previously opaque to information systems having their internal content accessed and subject to consultation. Another advantage of this approach is that it was possible to give better treatment to images and tables. Furthermore, the innovation presents resources for enriching the information extracted, considering the specificity of the oil and gas (O&G) domain, carried out by using metadata extractors and specialized machine learning computational models, including models for image classification, spelling correction and identification of domain named entities.

The method for extracting and structuring information is a process that receives an unstructured document at input, extracts its information, reorganizes and makes this information available in files that can be consumed by other systems. The method proposed here, as illustrated in the diagram in Figure 1, comprises: (1) document page separator, (2) block detection and segmentation model, (3) table extractor, (4) image extractor, (5) image classification model, (6) text extractor, (7) computer vision model for improving the image quality of the texts, (8) optical character recognition model, (09) model for spelling correction, (10) models for semantic enrichment of the text, (11) output file organizer and (12) metadata aggregator for information enrichment.

The first step of the method consists of (1) transforming the document pages into images and using (2) artificial intelligence models based on convolutional neural networks to identify the main blocks that make up these pages, segmenting them into text blocks, images and tables. By way of example, the detection, delimitation and classification of these blocks can be done using deep neural networks typical for this type of application, such as Mask R-CNN, but not limited to these.

With this, each block receives the most appropriate treatment respectively. The blocks identified as tables are processed by one (3) table extractor, so that the information contained in the tables is structured in a file in CSV format. The images with their respective captions are submitted to one (4) image extractor, saved in individual files and processed by one (5) image classification model. The blocks identified as text, list or equation are submitted to a (6) text extractor and, if it is not possible to retrieve the information directly from the main file, they are pre-processed by (7) computer vision models to improve the quality of the image, to reduce noise, geometric deformations, or irregularities in the background of the text image. Such models can be, for example, but without loss of generality, based on convolutional neural networks coupled to conditional generative adversarial networks (CNN+GAN), which learn to map an input image with poor quality to a corresponding image with more readable text.

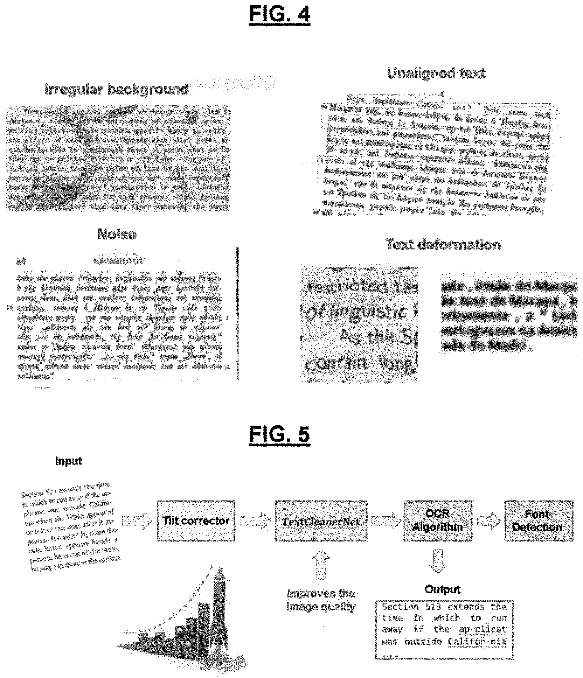

Subsequently, from these processed images, texts are extracted from one (8) optical character recognition (OCR) model. Although the problem has been widely studied for years and there are many high-performance OCR algorithms, the subject remains under development due to the fact that most algorithms are not robust to anomalies present in the image, such as noise, irregular background, text tilt, deformations, varied handwriting, among others. Examples are presented in figure 4. Normally, these anomalies produce a wide variety of errors ranging from the inclusion of non-existent accents to the erroneous identification of the characters. For example, an unaligned text can cause characters to mix between words on two consecutive lines; a blurry text image may cause similar characters to be confused, etc. Figure 5 shows the text processing flow from left to right. It can be seen that the system is divided into four processes: the text alignment corrector; then a neural network that improves the image quality, named TextCleaner-Net; then the optical character recognition (OCR) model, effectively; and, finally, the classifier to determine the font type of each word based on the MobileNet neural network.

The alignment corrector consists of a convolutional neural network (CNN) that estimates the angle of inclination of the text in the image, followed by a geometric transformation matrix that rotates the image in the opposite orientation to the angle estimated by the network. The TextCleanerNet network is a Generative Adversarial Network (GANs) that takes an image as input and produces a clean version of the same. The OCR algorithm selected was Tesseract 5, which represents the state of the art in the field, and which, in addition, has support for multi-languages through low computational cost. Finally, the font detector is a classifier based on a MobileNet network, which is used to determine the font type of each word preceded by OCR. To do this, the classifier takes advantage of the boxes detected by OCR to extract the image clippings used as input to the classifier.

Next, the textual content goes through steps of (9) spelling correction considering the oil and gas (O&G) domain vocabulary and (10) enrichment with semantic metadata (including processes for recognizing named entities, identifying relations and Part of Speech Tagging), being stored in XML files. Finally, all extracted information is (11) organized in the output file organizer and (12) new metadata information is aggregated. Briefly, the steps of the method are:
A) Transform all pages of the document into images (1);
B) Use (2) the block detection model to identify the main elements of each page, segmenting them into blocks of texts, images and tables;
C) Extract (3) table if the block is classified as a table, so that the information contained therein is structured and stored in a file in CSV format;
D) Extract (4) images and their respective captions, if the block is identified as an image, recorded in individual files and processed by one (5) image classification model to aggregate additional metadata;
E) Extract (6) content if it is text, list or equation. If it is not possible to retrieve the textual information directly from the main file, it is pre-processed by (7) computer vision models to improve image quality, and subsequently extracted from one (8) optical character recognition (OCR) model;
F) For text format blocks, the textual content is also subjected to steps of (9) spelling correction considering the oil and gas (O&G) domain vocabulary and (10) enrichment with semantic metadata (including processes for recognizing named entities, relation identification and Part of Speech Tagging), being stored in XML files;
G) All information extracted by the method is (11) organized in the output file organizer and (12) new information is aggregated to enrich metadata.

In general, artificial intelligence algorithms, especially the machine learning algorithms used in this invention, have two steps. First, real data is used to train a model (for example, document pages segmented into blocks are presented so that the model "learns" to recognize the blocks). In the second phase - known as inference - the already trained model is used to perform the same task on documents it has never had access to. The more training documents, the better the final result. This is where the synthetic document generator comes in. In a very simple way, it is possible to generate millions of documents to train the model and improve its final quality.

For this reason, in addition to the main extraction process described above, there is a complementary process of synthetic document generation, used to create thousands, or even millions, of synthetic documents that emulate real documents. These synthetic documents are used to train and update the artificial intelligence models used in the main process of extracting information. The method for generating the synthetic documents and training the artificial intelligence models, as illustrated in the diagram in Figure 2, comprises: (1) Generation of synthetic documents, (2) Training/Tuning of computer vision and classification models, (3) Quality control of the models under synthetic and real sets, (4) Assessment of extraction results in the oil and gas (O&G) domain), (5) Identification of new formats or alterations to existing formats, (6) Adjustment of parameters / Configuration of new synthetic formats.

Some of the parameters to be adjusted, and which are associated with synthetic document formats, are: coordinates and dimensions of objects on the page; synthetic annotation label to identify the type of object (text, equation, image, table, line); grouping of objects - enabling classification of figure captions, table captions and equation captions; font (typography), style and font size of the text. During the generation of synthetic documents, values for these parameters are chosen randomly according to ranges with predefined probabilities for the formats, and fragments of synthesized objects are positioned on the page obeying the values chosen for these parameters.

## Claims

1. A METHOD FOR EXTRACTING AND STRUCTURING INFORMATION, **characterized in that** it comprises: (1) PDF page separator, (2) block detection and segmentation model, (3) table extractor, (4) image extractor, (5) image classification model, (6) text extractor, (7) computer vision model for improving the image quality of the texts, (8) optical character recognition model, (09) model for spelling correction, (10) models for semantic enrichment of the text, (11) output file organizer and (12) metadata aggregator for information enrichment, algorithm for generating synthetic documents and Artificial Intelligence models.

2. THE METHOD according to claim 1, **characterized in that** it comprises the following steps:
a) Transform all pages of the document into images (1);
b) Use the (2) block detection model to identify the main elements of each page, segmenting them into blocks of texts, images and tables;
c) Extract (3) table if the block is classified as a table, so that the information contained therein is structured and stored in a file in CSV format;
d) Extract (4) images and their respective captions, if the block is identified as an image, recorded in individual files and processed by one (5) image classification model to aggregate additional metadata;
e) Extract (6) content if it is text, list or equation, but if it is not possible to retrieve the textual information directly from the main file, it is pre-processed by (7) computer vision models to improve image quality, and subsequently extracted from one (8) optical character recognition (OCR) model;
f) For text format blocks, the textual content is also subjected to steps of (9) spelling correction considering the oil and gas (O&G) domain vocabulary and (10) enrichment with semantic metadata (including processes for recognizing named entities, relation identification and Part of Speech Tagging), being stored in XML files;
g) All extracted information is (11) organized in the output file organizer and (12) new information is aggregated to enrich metadata.

3. THE METHOD according to claims 1 and 2, **characterized in that** the synthetic document generation algorithm creates a training base made up of millions of synthetic documents, which emulate real documents commonly used by the oil and gas (O&G) industry in different variations of layouts, by means of the synthetic document generator.

4. THE METHOD according to claim 3, **characterized in that** synthetic documents are used to train and update the artificial intelligence models used in the main process of extracting information.

5. THE METHOD according to claim 3 or 4, **characterized in that** it comprises the following steps:
a) Generation of synthetic documents (1), in different layout configurations;
b) Training/Tuning of computer vision and classification models (2);
c) Quality control of the models under synthetic and real sets (3);
d) Assessment of extraction results in the oil and gas (O&G) domain (4);
e) Identification of new formats or alterations to existing formats (5);
f) Adjustment of parameters / Configuration of new synthetic formats (6).

6. THE METHOD according to any of the previous claims, **characterized in that** the training and updating of all artificial intelligence models used in the method are included in the steps of (2) block detection and segmentation model, (5) image classification model, (7) computer vision model for improving the image quality of the texts, (8) optical character recognition OCR model, (09) model for spelling correction, (10) models for semantic enrichment of the text (including processes for recognizing named entities, identifying relations and Part of Speech Tagging).
